(19) Europäisches Patentamt
European Patent Office
Office européen des brevets

(11) **EP 1 028 861 B1**

(12) **EUROPÄISCHE PATENTSCHRIFT**

(45) Veröffentlichungstag und Bekanntmachung des Hinweises auf die Patenterteilung:
**30.07.2003 Patentblatt 2003/31**

(21) Anmeldenummer: **98961136.3**

(22) Anmeldetag: **05.11.1998**

(51) Int Cl.⁷: **B60H 1/00**, G01J 1/04

(86) Internationale Anmeldenummer:
**PCT/EP98/07050**

(87) Internationale Veröffentlichungsnummer:
**WO 99/024276 (20.05.1999 Gazette 1999/20)**

(54) **SONNENSTANDSDETEKTOR**

SOLAR ALTITUDE DETECTOR

DETECTEUR DE LA HAUTEUR DU SOLEIL

(84) Benannte Vertragsstaaten:
**DE ES FR GB IT**

(30) Priorität: **05.11.1997 DE 19748826**

(43) Veröffentlichungstag der Anmeldung:
**23.08.2000 Patentblatt 2000/34**

(73) Patentinhaber: **Leopold Kostal GmbH & Co. KG**
**58507 Lüdenscheid (DE)**

(72) Erfinder: **BLÄSING, Frank**
**D-59457 Werl (DE)**

(74) Vertreter: **Schröter & Haverkamp**
**Patentanwälte**
**Im Tückwinkel 22**
**58636 Iserlohn (DE)**

(56) Entgegenhaltungen:
**US-A- 5 355 222**  **US-A- 5 455 415**
**US-A- 5 483 060**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Sonnenstandsdetektor für Kraftfahrzeuge mit einem photosensitiven, eine Vielzahl von einzelnen Bildpunkten aufweisenden Sensorarray und mit einer in Abhängigkeit vom Sonnenstand unterschiedliche Bereiche des Sensorarrays abschattenden Schattenmaske, wobei das Sensorarray an eine Prozessoreinheit zum Auswerten der Sonnenbestrahlungsrichtung und zum Ansteuern von Aktoren angeschlossen ist und wobei in die Schattenmaske zumindest eine eine Lichtstruktur erzeugende Durchlaßöffnung zum Durchlassen von Sonnenlicht eingebracht ist, welche Lichtstruktur zum Bestrahlen einzelner Abschnitte der photosensitiven Oberfläche des Sensorarrays angeordnet und dergestalt ausgebildet ist, daß durch die in Abhängigkeit von dem Einfallswinkel des durch die Durchlaßöffnung durchtretenden Sonnenlichtes bestrahlten Bildpunkte des Sensorarrays eine eindeutige Aussage in Bezug auf den Einfallswinkel des Sonnenlichtes möglich ist.

Sonnenstandsdetektoren werden in Kraftfahrzeugen für eine Innenraumtemperaturregelung eingesetzt. Beispielsweise ist aus der DE 40 41 770 C1 ein Sonnensensor bekannt, mit dem in Abhängigkeit von der Intensität der Sonneneinstrahlung die Klimaanlage eines Kraftfahrzeuges regelbar ist. Ein solcher Sonnensensor besteht im wesentlichen aus einem optoelektronischen Wandler, dem zur Erfassung eines möglichst breiten Umgebungsausschnittes eine Linse vorgeschaltet ist. Eine solche Vorrichtung vermag zwar die Strahlungsintensität einfallenden Sonnenlichtes zu erfassen, jedoch ist eine Erfassung des Sonnenstandes nicht möglich.

Aus der DE 38 21 743 A1 ist ein Sonnenstandsdetektor bekannt geworden, bei dem als Sensoreinheit zwei derartige Sonnensensoren vorgesehen sind. Die Sensoren sind zueinander dergestalt angeordnet, daß eine Erkennung der Einfallsrichtung des Lichtes möglich ist. Zu diesem Zweck kann vorgesehen sein, die beiden Sensoren winklig zueinander anzuordnen oder diese durch eine Schattenmaske bzw. Trennscheibe voneinander zu trennen. Die von den beiden Sensoren erfaßten Lichtintensitäten sind in Abhängigkeit vom Lichteinfall unterschiedlich, so daß aus diesem Unterschied auf die Einstrahlrichtung rückgeschlossen werden kann. Die beiden Sonnensensoren sind an eine Prozessoreinheit angeschlossen, in welcher die Auswertung der erfaßten Sonnenintensität erfolgt und über die die Klimaanlage seitenunabhängig ansteuerbar ist.

Ein solcher Sonnenstandsdetektor ist üblicherweise auf der Oberseite des Armaturenbrettes eines Kraftfahrzeuges hinter der Windschutzscheibe angeordnet. Dabei weist die Schattenmaske in Fahrtrichtung, so daß ein linker Sonnensensor und ein rechter Sonnensensor gebildet sind. Trifft auf diesen Sonnenstandsdetektor Sonnenlicht von vorne oder von oben auf, führt dies gleichermaßen zu einer Bestrahlung des linken sowie des rechten Sonnensensors. Folglich wird die jeder Fahrzeugseite zugeordnete Klimaanlage gleich angesteuert. Trifft dagegen das Sonnenlicht in einem seitlichen Winkel auf den Sonnenstandsdetektor, etwa von der Beifahrerseite aus, dann wird von dem rechten Sonnensensor die Sonnenintensität erfaßt. Der linke Sonnensensor ist dagegen durch die scheibenartige Schattenmaske abgeschattet. Diese unterschiedliche Sonnenintensitätserfassung in den beiden Sonnensensoren läßt direkt auf einen ungefähren Sonnenstand, nämlich rechts, mitte oder links schließen. Dem genannten Beispiel zufolge wird folglich die Klimaanlage der sonnenbeschienenen Beifahrerseite stärker kühlend angesteuert als diejenige der Fahrerseite, die sich im Schatten befindet.

Mit diesem bekannten Sonnenstandsdetektor ist eine rechts-mitte-links-Erfassung des Sonnenstandes möglich. Es besteht jedoch der Wunsch, mit Hilfe eines Sonnenstandsdetektors eine Sonnenstandserfassung durchführen zu können, bei der nicht nur eine Sonnenstandserfassung hinsichtlich einer rechts-mitte-links-Anordnung möglich ist, sondern mit der eine Sonnenstandserfassung innerhalb des über einem Kraftfahrzeug befindlichen Halbraum möglich ist. Eine solche Sonnenstandserfassung wird insbesondere gewünscht, wenn weitere sonnenstandsabhängige Funktionen, wie zum Beispiel eine Tönungssteuerung elektrochromer Fahrzeugscheiben, gewünscht ist.

Aus der DE 195 48 578 A1 ist ein positionsselektiver passiver Infrarot-Intrusions-Sensor bekannt. Dieser Sensor dient zur Erfassung bewegter und ruhender Wärme abstrahlender Objekte, zu ihrer Positionsbestimmung sowie zur Bestimmung der Bewegungsrichtung derartiger Objekte. Die Sensoreinheit umfaßt zur Ortung mehrere, unterschiedliche Winkelbereiche abdeckende Empfänger, wobei sich die Winkelbereiche aneinandergrenzender Empfänger bereichsweise überschneiden. Die Ausgangssignale der Empfänger werden durch einen Vergleich der in den unterschiedlichen Empfängern empfangenen Intensitäten ermittelt, woraus sich die Einfallsrichtung der empfangenen Wärmestrahlung ermitteln läßt. Für einen Einsatz zum Detektieren des Sonnenstandes in Bezug auf ein Kraftfahrzeug ist diese Vorrichtung jedoch nicht geeignet.

Ein weiterer Sonnenstandsdetektor ist aus der AT 403 095 B bekannt. Bei dem Gegenstand dieses Dokumentes handelt es sich um einen Sonnenstrahlungsmeß-Sensor für Global- und Diffusstrahlung. Bei dem aus diesem Dokument bekannten Sonnenstandsdetektor ist ein vertikal angeordneter Schattenspenderstab vorgesehen, in dessen Fußbereich konzentrisch diesen ringförmig umgebend eine Anzahl von photoempfindlichen Empfängern angeordnet sind. In Abhängigkeit von der Einfallsrichtung der Sonnenstrahlen werden unterschiedliche Empfänger beschattet, woraus sich die Einfallsrichtung der Sonnenstrahlen ableiten läßt. Nicht geeignet ist diese Vorrichtung zum Erfassen auch des Einfallswinkels - des Azimuts. Darüber hinaus ist bei diesem bekannten Sonnenstandsdetektor nachteilig, daß dieser kuppelartig ausgebildet ist, was wiederum einer Anordnung dieses Sonnenstandsdetektors auf der Kraftfahrzeugkarosserie entgegensteht.

Aus US 5 483 060 A ist ein weiterer Sonnenstandsdetektor gemäß des Oberbegriffes des Anspruchs 1 bekannt. Dieser Sonnenstandsdetektor verwendet als Sensoreinheit ein eine Vielzahl von einzelnen Bildpunkten aufweisendes Sensorarray, deren Bildpunkte in einer zweidimensionalen Anordnung vorgesehen sind. Die oberhalb des Sensorarrays angeordnete Schattenmaske weist als Lichtstruktur ein Kreuz auf. Je nach dem, in welchen Bereichen des Sensorarrays seine photosensitive Oberfläche durch die Lichtstruktur belichtet ist, erlaubt dies einen Rückschluß auf die Einfallsrichtung der Sonnenstrahlen. Mit diesem Sonnenstandsdetektor kann ebenfalls der Einfallswinkel in Bezug auf die Höhe des Sonnenstandes erfaßt werden. Von Nachteil ist bei diesem vorbekannten Sonnenstandsdetektor, dass ein nicht unbeträchtlicher Har- und Softwareaufwand zum bestimmungsgemäßen Betreiben dieses Sonnenstandsdetektors notwendig ist.

Ausgehend von diesem diskutierten Stand der Technik liegt der Erfindung daher die Aufgabe zugrunde, einen eingangs genannten gattungsgemäßen Sonnenstandsdetektor dergestalt weiterzubilden, dass sich eine eindeutige Sonnenstandsdetektion auch mit einem geringeren Aufwand an eingesetzter Hardware und mit einem geringeren Berechnungsaufwand realisieren läßt.

Diese Aufgabe wird erfindungsgemäß dadurch gelöst, daß die zumindest eine Durchlaßöffnung zwei konvergent zueinander angeordnete Abschnitte aufweist und daß als Sensorarray eine Sensorzeile vorgesehen ist, die quer zur Längserstreckung der beiden konvergent zueinander angeordneten Abschnitte der zumindest einen Durchlaßöffnung angeordnet ist.

Dieser Sonnenstandsdetektor verwendet eine Schattenmaske, in der eine eine zwei konvergent zueinander angeordnete Abschnitte umfassende Lichtstruktur erzeugende Durchlaßöffnung zum Durchlassen von Sonnenlicht eingebracht ist. Als Sensorarray dient eine Sensorzeile, die quer zur Längserstreckung dieser beiden konvergent zueinander angeordneten Abschnitten der Durchlaßöffnung angeordnet ist.

Dabei ist vorgesehen, daß die Länge der Sensorzeile deutlich größer ist als der Abstand der beiden konvergent zueinander verlaufenden Abschnitte. Die konvergent zueinander angeordneten Abschnitte der Durchlaßöffnung, die entsprechende Lichtstrukturen erzeugen, dienen zum eindeutigen Zuordnen der Einfallsrichtung und des Einfallswinkels der Sonnenstrahlen. Durch die quer zu dem konvergenten Verlauf der Abschnitte angeordnete Sensorzeile ist der sich verjüngende Abstand der beiden Abschnitte bei seiner sonnenstandsabhängigen Projektion auf die Sensorseite ein Maß für den Azimut des Sonnenstandes und die Lage dieser durch den Azimut des Sonnenstandes definierten und beabstandeten Lichtstrukturen auf der Sensorzeile ein Maß für die Einfallsrichtung.

Mit einem solchen Sonnenstandsdetektor, der zweckmäßigerweise zur vollständigen Erfassung des oberhalb eines Kraftfahrzeuges befindlichen Halbraumes im Bereich des Daches angeordnet ist, kann sodann eine Sonnenstandserfassung durchgeführt werden, die eine Aussage hinsichtlich des Raumwinkels der einfallenden Sonnenstrahlen ermöglicht. Diese differenzierte Erfassungsmöglichkeit erlaubt somit auch eine Verwendung des Sonnenstandsdetektors für die Durchführung einer Tönungssteuerung elektrochromer Fahrzeugscheiben. In Abhängigkeit vom Azimut des Einfallswinkels können beispielsweise Scheiben nur in ihrem oberen Bereich oder auch insgesamt bei Bedarf getönt werden. Auf einen Einsatz von Sonnenblenden kann dann verzichtet werden. Darüber hinaus erlaubt dieser Sonnenstandsdetektor aber auch eine Aussage hinsichtlich der Richtung des Einfalls der Sonnenstrahlen, so daß entsprechend die Seitenscheiben, die Frontscheibe oder auch nur die Heckscheibe bei Bedarf getönt werden können. Mit dem erfindungsgemäßen Sonnenstandsdetektor lassen sich jedoch auch andere sonnenstandsabhängige Funktionen, wie etwa eine Klimaanlagensteuerung, durchführen.

Bevorzugt ist die Durchlaßöffnung etwa Y-förmig ausgebildet, so daß die beiden konvergent zueinander angeordneten Abschnitte einen gemeinsamen Frontdurchlaß bildend zusammenlaufen. Der gemeinsame Frontdurchlaß kann parallele Begrenzungen aufweisen. Zweckmäßigerweise ist ein solcher Sonnenstandsdetektor mit dem Frontdurchlaß in Fahrtrichtung nach vorne zeigend eingebaut. Die quer zur Längserstreckung der konvergenten Abschnitte angeordnete Sensorzeile ist dann quer zur Fahrtrichtung montiert. Die Ausbildung eines gemeinsamen Frontdurchlasses beeinträchtigt das Auflösungsvermögen des Sonnenstandsdetektors nicht, denn nur wenn Sonnenstrahlen unmittelbar von vorne kommen und zugleich einen sehr geringen Einfallswinkel aufweisen, erfolgt eine Abbildung dieses Frontdurchlasses auf der Sensorzeile. Bei einem solchen Sonnenstand, bei dem die auf den Sonnenstanddetektor auftretenden Sonnenstrahlen durch den Frontdurchlaß eintreten, ist eine recht-links-Unterscheidung über die gesamte Breite der Sensorzeile möglich.

Entsprechend können ebenfalls die dem gemeinsamen Frontdurchlaß gegenüberliegenden Enden der konvergierenden Abschnitte parallel zueinander ausgerichtet sein. Die Größe des maximalen Abstandes der konvergierenden Abschnitte bestimmt letztlich auch die Länge der zu verwendenden Sensorzeile. Da diese nicht unnötig lang sein soll und da bei sehr niedrigen Sonnenständen, bei denen das Sonnenlicht von hinten auf ein Kraftfahrzeug fällt, ebenfalls eine rechts-links-Unterscheidung nicht im vollen Umfange unbedingt notwendig macht, erlaubt dies die parallele Ausbildung der rückwärtigen Endabschnitte der konvergierenden Abschnitte.

In einem Ausführungsbeispiel ist vorgesehen, daß die Schattenmaske mit einem bestimmten Abstand oberhalb der Oberfläche des Sensorarrays angeordnet ist. Durch den Abstand der Schattenmaske zur Oberfläche des Sensorarrays wird unter anderem auch das Auflösungsvermögen des Sonnenstandsdetektors beeinflußt. Ebenfalls wird durch den Abstand der Schattenmaske zur Oberfläche des Sonnenstandsdetektors der Bereich des zu erfassenden Halbraumes definiert. Ist der Abstand der Sonnenmaske zur photosensitiven Oberfläche des Sensorarrays klein, kann ein größerer Halbraum betrachtet werden als bei einem größeren Abstand. Entsprechend geringer ist jedoch die Auflösung einer Sonnenstandsdetektion. Man wird daher den Abstand zwischen der Schattenmaske und dem Sensorarray so wählen, daß der zu beobachtende Halbraum sowie das Auflösungsvermögen ausreichend hoch sind.

In einem weiteren Ausführungsbeispiel ist vorgesehen, daß in dem oben definierten Abstand zur Schattenmaske die eine Stirnfläche eines lichtleitenden Faserbündels angeordnet ist, über welches Faserbündel die Lichtstruktur zur photosensitiven Oberfläche des Sensorarrays transportiert wird. Das Sensorarray kann dann beispielsweise in zentraler Position in einem Kraftfahrzeug angeordnet sein. Eine solche Ausgestaltung hat zum Vorteil, daß dann im Dachbereich keine elektrischen oder elektronischen Komponenten benötigt werden. Zu berücksichtigen ist dabei jedoch, daß das Auflösungsvermögen eines solchen Sonnenstandsdetektors auch durch den Durchmesser der einzelnen Fasern eines solchen Faserbündels bestimmt wird.

Weitere Vorteile der Erfindung sowie Ausgestaltung sind Bestandteil der übrigen Untersprüche sowie der nachfolgenden Beschreibung eines Ausführungsbeispieles. Es zeigen:

Fig. 1    Eine schematisierte Draufsicht auf einen Sonnenstandsdetektor, verwendend eine Sensorzeile als Sensorarray,

Fig. 2    einen Querschnitt durch den Sonnenstandsdetektor der Figur 1 entlang der Linie A-B,

Fig. 3    einen Längsschnitt durch den Sonnenstandsdetektor der Figur 1 entlang der Linie C-D,

Fig. 4 a,b    weitere Schattenmasken für eine Sensorzeile verwendende Sonnenstandsdetektoren und

Fig. 5    ein Signaldiagramm einer Sensorzeile bei Lichtbeaufschlagung mit einer Lichtstruktur gemäß dem Sonnenstandsdetektor der Figur 1.

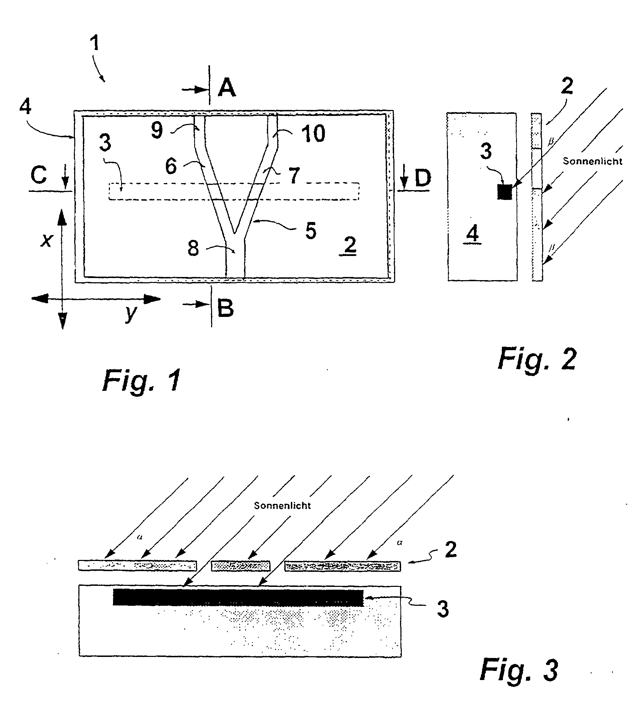

Ein Sonnenstandsdetektor 1 umfaßt eine Schattenmaske 2 und eine darunter angeordnete Sensorzeile 3. Die Sensorzeile 3 ist in einem Sensorgehäuse 4, wie aus Figur 2 ersichtlich, aufgenommen. In die Schattenmaske 2 ist eine Durchlaßöffnung 5 eingebracht, die bei Sonnenlichtbestrahlung eine Lichtstruktur erzeugt. Diese Lichtstruktur bzw. Abschnitte dieser Lichtstruktur bestrahlen dann unterschiedliche Pixelcluster der Sensorzeile 3.

Die Durchlaßöffnung 5 umfaßt zwei konvergent zueinander angeordnete Abschnitte 6, 7, die mit ihren konvergierenden Enden in einen Frontdurchlaß 8 münden. Die dem Frontdurchlaß 8 gegenüberliegenden Enden der Abschnitte 6, 7 münden in parallel zueinander angeordnete Heckabschnitte 9, 10.

In Abhängigkeit von der Einfallsrichtung und dem Einfallswinkel des Sonnenlichtes, welches in parallelen Strahlen auf die Oberfläche der Schattenmaske 2 auftrifft, werden unterschiedliche Pixelcluster der Sensorzeile 3 von entsprechend dem Sonnenstand wiedergebenden Abschnitten der durch die Durchlaßöffnung 5 gebildeten Lichtstruktur bestrahlt.

Der Sonnenstandsdetektor 1 ist unterhalb einer durchsichtigen Scheibe im Dach eines Kraftfahrzeuges angeordnet, wobei der Frontdurchlaß 8 in Fahrtrichtung des Fahrzeuges nach vorne weist und entsprechend die Heckabschnitte 9, 10 der Durchlaßöffnung 5 nach hinten weisend angeordnet sind. Die Sensorzeile 3 ist dann quer zur Fahrtrichtung des Kraftfahrzeuges angeordnet, wie dies durch das Koordinatenkreuz mit x- bzw. y-Richtung angegeben ist. Der Abstand der Abschnitte 6, 7 gibt den Sonnenstandswinkel in x-Richtung wieder. Dabei erfolgt eine Unterscheidung des Sonnenstandes in dieser Richtung ausschließlich in dem Bereich der konvergierenden Abschnitte 6, 7. Im Bereich des Frontdurchlasses 8 sowie im Bereich der Heckabschnitte 9, 10 kann aufgrund ihrer parallelen Anordnung zur x-Richtung keine Unterscheidung hinsichtlich des Sonnenstandes in dieser Richtung erfolgen. Dies ist auch nicht notwendig, da diese Abschnitte ohnehin nur dann sonnendurchstrahlt sind, wenn die Sonne extrem tief steht und somit einen ganz geringen Einfallswinkel aufweist. Die Heckabschnitte 9, 10 sind deswegen parallel angeordnet, damit die Länge der Sensorzeile 3 nicht unnötig groß bemessen werden muß.

Bei einer angenommenen Sonnenbestrahlung von rechts oben wird auf dem Sensorarray 3 ein Abschnitt bestrahlt, wie er in den Figuren 2 und 3 wiedergegeben ist. Unter Bezug auf diese Figuren wird deutlich, daß der Abstand zwischen der Schattenmaske 2 und der Sensorzeile 3 sowohl Einfluß auf das Auflösungsvermögen des Sonnenstandsdetektors 1 sowie auf den minimal zu erfassenden Azimut des Sonnenstandes Einfluß hat.

Der Sonnenstand läßt sich durch Erfassen der beiden Raumwinkel $\alpha$ und $\beta$ errechnen. Dabei kann sowohl die absolute Lage der Gesamtprojektion auf der Sensorzeile 3 als auch die relative Lage der beiden Teilprojektionen der Abschnitte 6, 7 zueinander betrachtet werden.

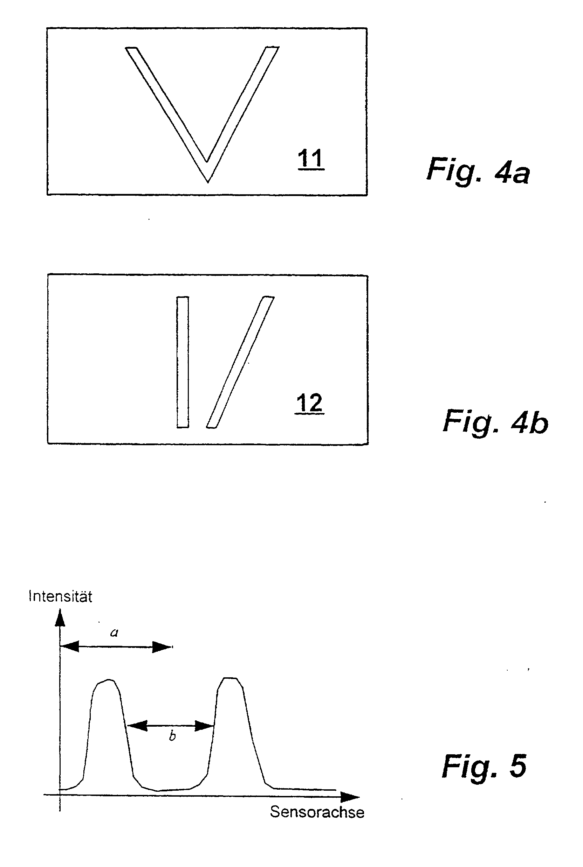

Anstelle der in den Figuren 1 - 3 gezeigten Schattenmaske 2 können beispielsweise auch solche Schattenmasken 11, 12, wie in den Figuren 4a und 4b gezeigt, verwendet werden.

Die Signale der ausgelesenen Sensorzeile 3 bei der angenommenen Sonnenbestrahlung ist in Figur 5 abgebildet. Deutlich erkennbar sind diejenigen Pixelbereiche, die von den durch die Abschnitte 6, 7 hindurchtretenden Sonnenstrahlen bestrahlt werden. Der Flankenabstand b der beiden Signalpeaks ist sodann ein Maß für die Sonneneinstrahlungsrichtung in x-Richtung; der mittlere Abstand a, der vom Rand der Sensorzeile 3 aus gemessen ist, ist Maß für die Sonnenstandsrichtung in y-Richtung. Die in den Figuren 2 und 3 gezeigten realen Winkel $\alpha$, $\beta$ ergeben sich nicht linear aus a und b, sondern gemäß nachfolgend wiedergegebenen Formeln:

$$\alpha = \arctan\frac{d}{a} \, ,$$

$$\beta = \arctan\frac{k \cdot b}{d} \, ,$$

wobei $d$ dem Abstand zwischen der Schattenmaske 2 und der Sonsorzeile 3 und $k$ der Steigung der Durchlaßöffnung 5 entsprechen.

Die mit der Sensorzeile 3 erfaßten Daten können ferner hinsichtlich ihrer Flankensteilheit und anderer Belichtungsparameter ausgewertet werden, um weitere Informationen bezüglich der Beleuchtungssituation zu erhalten. Beispielsweise kann die Empfindlichkeit der Sensorzeile so ausgelegt sein, daß diese bei direkter Sonneneinstrahlung übersteuert ist. Dadurch ist eine steile Signalflanke erhältlich verglichen mit einer solchen erzeugt durch diffus eintretendes Licht, wodurch flachere Signalflanken ausgebildet werden. Über die Erfassung der gesamten Lichtintensität ist mit dem Sonnenstandsdetektor 1 auch die Kraftfahrzeugbeleuchtung schaltbar.

**Zusammenstellung der Bezugszeichen**

1    Sonnenstandsdetektor
2    Schattenmaske
3    Sensorzeile
4    Sensorgehäuse
5    Durchlaßöffnung
6    Abschnitt der Durchlaßöffnung
7    Abschnitt der Durchlaßöffnung
8    Frontdurchlaß
9    Heckabschnitt
10   Heckabschnitt
11   Schattenmaske

12   Schattenmaske

$a$    Randabstand des mittigen Flankenabstandes
$b$    Flankenabstand

$\alpha$    Eintrittswinkel in x-Richtung
$\beta$    Eintrittswinkel in y-Richtung

**Patentansprüche**

1.  Sonnenstandsdetektor für Kraftfahrzeuge mit einem photosensitiven, eine Vielzahl von einzelnen Bildpunkten aufweisenden Sensorarray (3) und mit einer in Abhängigkeit vom Sonnenstand unterschiedliche Bereiche des Sensorarrays (3) abschattenden Schattenmaske (2, 11, 12), wobei das Sensorarray (3) an eine Prozessoreinheit zum Auswerten der Sonnenbestrahlungsrichtung und zum Ansteuern von Aktoren angeschlossen ist und wobei in die Schattenmaske (2, 11, 12) zumindest eine eine Lichtstruktur erzeugende Durchlaßöffnung (5) zum Durchlassen von Sonnenlicht eingebracht ist, welche Lichtstruktur zum Bestrahlen einzelner Abschnitte der photosensitiven Oberfläche des Sensorarrays (3) angeordnet und dergestalt ausgebildet ist, daß durch die in Abhängigkeit von dem Einfallswinkel des durch die Durchlaßöffnung (5) durchtretenden Sonnenlichtes bestrahlten Bildpunkte des Sensorarrays (3) eine eindeutige Aussage in Bezug auf den Einfallswinkel des Sonnenlichtes möglich ist, **dadurch gekennzeichnet, daß** die zumindest eine Durchlaßöffnung (5) zwei konvergent zueinander angeordnete Abschnitte (6, 7) aufweist und daß als Sensorarray eine Sensorzeile (3) vorgesehen ist, die quer zur Längserstreckung der beiden konvergent zueinander angeordneten Abschnitte (6, 7) der zumindest einen Durchlaßöffnung (5) angeordnet ist.

2.  Sonnenstandsdetektor nach Anspruch 1, **dadurch gekennzeichnet, daß** die zueinander konvergent angeordneten Abschnitte (6, 7) der Durchlaßöffnung (5) an ihrem einen Ende einen gemeinsamen Frontdurchlaß (8) bildend zusammenlaufen.

3.  Sonnenstandsdetektor nach Anspruch 1 oder 2, **dadurch gekennzeichnet, daß** die freien Endabschnitte der konvergent angeordneten Abschnitte (6, 7) parallel zueinander angeordnet sind.

4.  Sonnenstandsdetektor nach einem der Ansprüche 1 bis 3, **dadurch gekennzeichnet, daß** das Sensorarray (3) mit einem Abstand unterhalb der Schattenmaske (2, 11, 12) angeordnet ist.

5.  Sonnenstandsdetektor nach einem der Ansprüche 1 bis 3, **dadurch gekennzeichnet, daß** die durch die Durchlaßöffnung (5) erzeugte Lichtstruktur in die vorderseitige Stirnfläche eines lichtleitenden Faserbündels eingekoppelt ist, welche auf der anderen Stirnfläche des Faserbündels austretenden Lichtstrahlen die photosensitive Oberfläche des Sensorarrays beaufschlagen.

## Claims

1. Solar altitude detector for automotive vehicles, said detector including a photosensitive sensor array (3), which has a plurality of individual image points, and a shade mask (2, 11, 12) which shades different regions of the sensor array (3) in dependence on the solar altitude, the sensor array (3) communicating with a processor unit to evaluate the direction of the solar radiation and to trigger actuators, and at least one through-aperture (5), which produces a light structure, being introduced into the shade mask (2, 11, 12) to permit sunlight to pass therethrough, which light structure is disposed and provided to irradiate individual portions of the photosensitive surface of the sensor array (3) in such a manner that a specific determination relating to the angle of incidence of the sunlight is possible by means of the image points of the sensor array (3) which are irradiated in dependence on the angle of incidence of the sunlight passing through the through-aperture (5), **characterised in that** the at least one through-aperture (5) has two portions (6, 7), which are disposed in a converging manner relative to each other, and **in that** a sensor line (3) is provided as the sensor array which is disposed transversely relative to the longitudinal extent of the two portions (6, 7), which are disposed in a converging manner relative to each other, of the at least one through-aperture (5).

2. Solar altitude detector according to claim 1, **characterised in that** the portions (6, 7) of the through-aperture (5), which are disposed in a converging manner relative to each other, converge at their one end to form a common front passage (8).

3. Solar altitude detector according to claim 1 or 2, **characterised in that** the free end portions of the portions (6, 7), which are disposed in a converging manner, are disposed parallel to one another.

4. Solar altitude detector according to one of claims 1 to 3, **characterised in that** the sensor array (3) is disposed at a spacing beneath the shade mask (2, 11, 12).

5. Solar altitude detector according to one of claims 1 to 3, **characterised in that** the light structure, produced by the through-aperture (5), is introduced into the front end face of a bundle of optical fibres, which light rays, emerging on the other end face of the fibre bundle, act on the photosensitive surface of the sensor array.

## Revendications

1. Détecteur de la hauteur du soleil pour des véhicules à moteur avec un bloc de détection optique (3) photosensible, présentant une multitude de points d'image, et avec un masque perforé (2, 11, 12) projetant une ombre et obscurcissant diverses zones du bloc de détection optique (3) en fonction de la hauteur du soleil, sachant que le bloc de détection optique (3) est raccordé à un processeur pour évaluer l'orientation des rayons du soleil ainsi que pour commander des acteurs et sachant que le masque perforé (2, 11, 12) est muni d'au moins une ouverture (5), produisant une structure lumineuse, traversée par la lumière du soleil, laquelle structure lumineuse est disposée pour permettre l'éclairage de certaines sections de la surface photosensible du bloc de détection optique (3) et est conçue de telle manière qu'il soit possible, à partir des points d'image éclairés du bloc de détection optique (3) en fonction de l'angle d'incidence de la lumière solaire traversant l'ouverture (5), d'obtenir des informations sans équivoque relatives à l'angle d'incidence des rayons lumineux, **caractérisé en ce qu'**il est prévu deux sections (6, 7) convergentes l'une par rapport à l'autre avec au moins une ouverture (5) et un bloc de détection optique qui soit une ligne de capteurs (3), laquelle est placée perpendiculairement à l'axe longitudinal des deux sections (6, 7) avec au moins une ouverture (5), sections (6, 7) disposées de manière convergente l'une par rapport à l'autre.

2. Détecteur de la hauteur du soleil selon la revendication 1 **caractérisé en ce que** les deux sections (6, 7) convergentes l'une par rapport à l'autre avec l'ouverture (5) se rencontrent en l'une de leurs extrémités en formant une ouverture frontale commune (8).

3. Détecteur de la hauteur du soleil selon la revendication 1 ou 2 **caractérisé en ce que** les sections d'extrémité libres des sections (6, 7) disposées de manière convergente, sont parallèles l'une par rapport à l'autre.

4. Détecteur de la hauteur du soleil selon l'une des revendications 1 à 3 **caractérisé en ce que** le bloc de détection optique (3) est placé sous le masque perforé (2, 11, 12) en respectant un intervalle.

5. Détecteur de la hauteur du soleil selon l'une des revendications 1 à 3 **caractérisé en ce que** la structure lumineuse produite par l'ouverture (5) est couplée à la surface frontale d'un faisceau de fibres conductrices de lumière, dont les rayons lumineux ressortant à l'autre extrémité frontale du faisceau de fibres arrivent sur la surface photosensible du bloc de détection optique.

Fig. 1

Fig. 2

Fig. 3

*Fig. 4a*

*Fig. 4b*

*Fig. 5*